# EUROPEAN PATENT SPECIFICATION

(11) **EP 2 778 409 B1**
(45) Date of publication and mention of the grant of the patent: **15.07.2020**
(21) Application number: 13768945.1
(22) Date of filing: 15.03.2013
(51) Int. Cl.: F04B 1/22, F04B 53/00, F04B 53/10, F04B 53/16, F16C 33/66, F16J 1/02, F04B 1/20, F03C 1/06, F16J 1/01, F16C 29/02, F16C 33/04, F16C 33/06

(54) **SLIDING MEMBERS AND PISTON PUMP MOTOR**
GLEITELEMENTE UND KOLBENPUMPENMOTOR
ÉLÉMENTS COULISSANTS ET MOTEUR DE POMPE À PISTON

(30) Priority: 30.03.2012 JP 2012081088
(43) Date of publication of application: 17.09.2014
(73) Proprietor: KYB Corporation, Tokyo 105-6111 (JP)
(72) Inventor: KATO, Shinji, Tokyo 105-6111 (JP); TAMURA, Tetsuya, Tokyo 105-6111 (JP); HOSOHATA, Shuhei, Tokyo 105-6111 (JP)
(74) Representative: Grünecker Patent- und Rechtsanwälte PartG mbB
(86) International application number: PCT/JP2013/057552
(87) International publication number: WO 2013/146393

(56) References cited:
- EP-A2- 1 418 353
- WO-A1-2008/149707
- WO-A2-2010/126026
- JP-A- H11 210 616
- JP-A- 2001 280 497
- JP-A- 2004 044 467
- JP-A- 2005 220 790
- JP-A- 2005 220 790

## Description

### TECHNICAL FIELD

The present invention relates to sliding members that slide against each other, and a piston pump/motor configured by using the sliding members.

### BACKGROUND ART

Japanese Patent Application Publication 2005-257035 discloses forming a sliding member that slides against a member made of a steel material from a copper alloy that exhibits superior seizure resistance relative to the steel material. Lead bronze is often used as the copper alloy.

### SUMMARY OF INVENTION

Lead bronze contains lead, however, which is harmful to the human body, and therefore demand exists for the formation of a sliding member using a lead-free material.

By forming a hard, low-friction amorphous carbon film (a so-called diamond-like carbon film) on a sliding surface of a sliding member that slides against a member made of a steel material, it may be possible to realize improved slidability between the two members. However, when minute foreign matter (so-called contamination) becomes caught between the respective sliding surfaces of the steel material member and the member having the amorphous carbon film, the amorphous carbon film may be damaged by the minute foreign matter such that the amorphous carbon film peels away from the sliding member. Further prior art is known from documents JP 2005 220 790 A and EP 141 8383 A2.

The latter shows a sliding combination wherein one surface is made of an aluminium alloy and the other of an amorphous hydrogenated carbon.

An object of the present invention is to provide two sliding members on which peeling of an amorphous carbon film can be suppressed while improving a slidability between the two members, and a piston pump/motor configured by using the sliding members.

The object is solved by the subject matter of claim 1. Dependent claims 2-4 refer to preferred embodiments.

Embodiments and advantages of the present invention will be described in detail below with reference to the attached drawings.

### BRIEF DESCRIPTION OF DRAWINGS

FIG. 1 is a sectional view of a piston pump/motor 2 according to an embodiment of the present invention.
FIG. 2 is a view illustrating a seizure load generated when one sliding member is caused to slide against the other sliding member.
FIG. 3 is a view showing seizure properties between phosphor bronze and various types of amorphous carbon.
FIG. 4 is a view showing seizure properties between various copper alloys and hydrogenated amorphous carbon containing chrome, and so on.
FIG. 5 is a view showing seizure properties between various aluminum alloys and hydrogenated amorphous carbon containing chrome, and so on.

### DESCRIPTION OF EMBODIMENTS

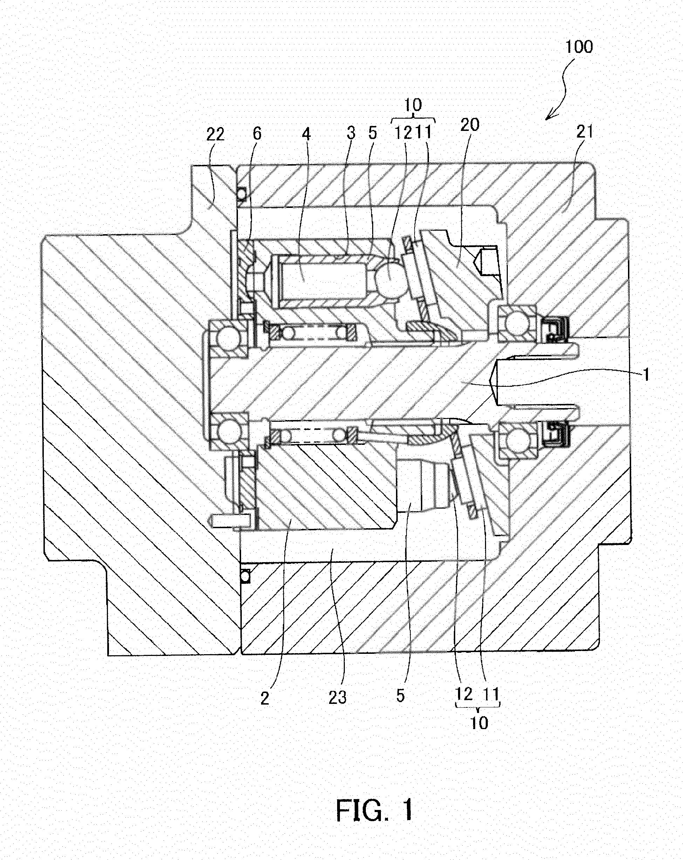

Referring to FIG. 1, a configuration of a swash plate type piston pump/motor 100 according to an embodiment of the present invention will be described.

The piston pump/motor 100 functions as a pump capable of supplying working oil (a working fluid) when a drive shaft 1 is rotated using external power such that a piston 5 reciprocates, and functions as a motor capable of outputting rotary drive power when the drive shaft 1 is rotated by causing the piston 5 to reciprocate using a pressure of externally supplied working oil.

The piston pump/motor 100 shown as an example in FIG. 1 is installed in a vehicle such as a construction machine and used as a pump that supplies working oil. The piston pump/motor 100 will therefore be described as a piston pump 100 hereafter. In this case, the drive shaft 1 is driven to rotate by power from an engine installed in the vehicle, and the piston pump 100 supplies the working oil to an actuator and so on.

The piston pump 100 includes the drive shaft 1,which is supported by cases 21, 22 to be free to rotate, and a cylinder block 2 housed in a housing chamber 23 that is defined by the cases 21, 22.

The drive shaft 1 is a rod-shaped member that is driven to rotate by the power of the engine. The cylinder block 2 is attached to the drive shaft 1 so as to rotate together with the rotation of the drive shaft 1.

The cylinder block 2 is a closed-end cylinder-shaped member. A plurality of cylinder bores 3 are opened in the cylinder block 2 and formed to be parallel to the drive shaft 1. The piston 5, which defines a volume chamber 4, is inserted into each cylinder bore 3 to be free to reciprocate.

A shoe 10 is coupled to a tip end of the piston 5 to be free to rotate. The shoe 10 is constituted by a circular flat plate portion 11, and a spherical seat 12 formed integrally with the flat plate portion 11. The spherical seat 12 is attached to a tip end portion of the piston 5, and the flat plate portion 11 of the shoe 10 is disposed in surface contact with a swash plate 20 fixed to the case 21.

When the drive shaft 1 is driven to rotate by the power of the engine such that the cylinder block 2 rotates, the flat plate portion 11 of the shoe 10 slides against the swash plate 20, whereby the piston 5 reciprocates along the cylinder bore 3 by a stroke corresponding to a tilt angle of the swash plate 20. As the piston 5 reciprocates, a volume of the volume chamber 4 increases and decreases.

A valve plate 6 against which a base end surface of the cylinder block 2 slides is fixed to the case 22, which closes an open end of the case 21. A suction port and a discharge port, not shown in the figure, are formed in the valve plate 6. Working oil is led through the suction port into the volume chamber 4 that expands as the cylinder block 2 rotates, and working oil is discharged through the discharge port from the volume chamber 4 that contracts as the cylinder block 2 rotates. Hence, in the piston pump 100, the working oil is suctioned and discharged continuously as the cylinder block 2 rotates.

It should be noted that in the piston pump 100 according to this embodiment, the swash plate 20 is fixed to the case 21, but the swash plate 20 may be disposed in the case 21 rotatably so that the tilt angle thereof can be adjusted.

During an operation of the piston pump 100, the cylinder block 2 slides against the valve plate 6. It is therefore necessary to improve a slidability between the cylinder block 2 and the valve plate 6 so that the piston 5 reciprocates smoothly and the working oil is suctioned and discharged with stability. Hence, in this embodiment, a sliding surface of the cylinder block 2 is formed from a copper alloy, and a sliding surface of the valve plate 6 is formed from amorphous carbon (so-called diamond-like carbon).

The cylinder block 2 is a closed-end cylinder-shaped member formed from a steel material such as dies steel (SKD11). A layer (a film) of phosphor bronze (CA502) is provided on an end surface of the cylinder block 2 that slides against the valve plate 6 using a known method such as sintering. Thus, a sliding surface (a sliding portion) of the cylinder block 2 is formed from phosphor bronze, which has a lower hardness than both the steel material serving as a base material of the cylinder block 2 and the amorphous carbon to be described below. Phosphor bronze is a lead-free copper alloy containing no lead.

The valve plate 6 is a disc-shaped member formed from a steel material such as dies steel (SKD11). A layer (a film) of amorphous carbon is provided on an end surface of the valve plate 6 that slides against the cylinder block 2 using a known method such as physical vapor deposition (PVD) or chemical vapor deposition (CVD). Thus, a sliding surface (a sliding portion) of the valve plate 6 is formed from amorphous carbon, which has a higher hardness and a lower frictional property than the steel material serving as a base material of the valve plate 6 and a copper alloy such as phosphor bronze. The amorphous carbon forming the sliding surface of the valve plate 6 is hydrogenated amorphous carbon (a-C:H(Cr)) doped with a metal such as chrome (Cr).

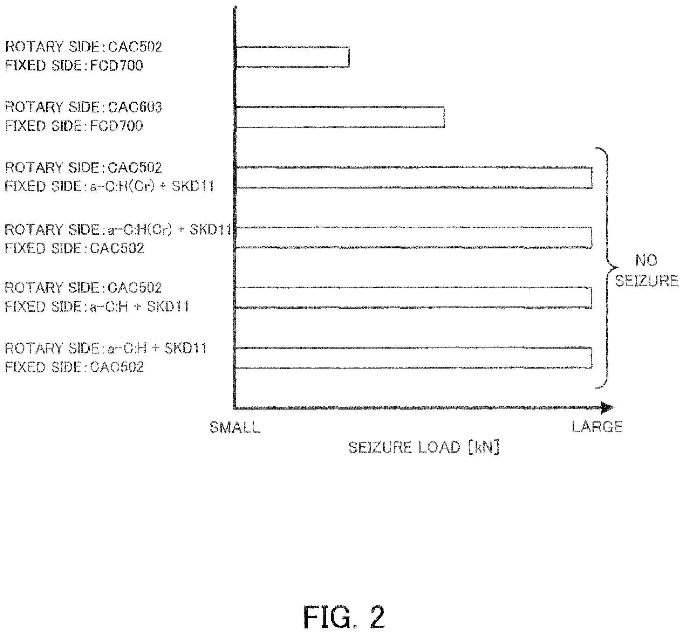

FIG. 2 is a graph verifying respective seizure properties of two sliding members having a layer of copper alloy and a layer of hydrogenated amorphous carbon on respective sliding surfaces thereof. The graph shows seizure loads generated when one sliding member is rotated while a fixed side sliding member is pressed against a part of the sliding surface of the rotary side sliding member such that seizure occurs on both sliding members.

As shown in FIG. 2, the seizure load generated when a sliding member formed from a cast iron material (FCD700) is pressed against a sliding member having a sliding surface made of lead bronze (CAC603) is greater than the seizure load generated when the sliding member formed from the cast iron material is pressed against a sliding member having a sliding surface made of lead-free phosphor bronze (CAC502). Hence, lead bronze is superior to phosphor bronze in terms of seizure resistance relative to the cast iron material.

When, on the other hand, an experiment was performed while pressing a sliding member (base material: SKD11) having a sliding surface made of hydrogenated amorphous carbon doped with chrome (a-C:H(Cr)) against a rotary side sliding member (base material: SKD11) having a sliding surface made of phosphor bronze, no seizure occurred. Likewise, no seizure occurred when a fixed side sliding member having a sliding surface made of phosphor bronze was pressed against a rotary side sliding member having a sliding surface made of hydrogenated amorphous carbon doped with chrome.

It was thus confirmed that by forming the sliding surface of one sliding member from hydrogenated amorphous carbon doped with chrome and forming the sliding surface of the other sliding member from phosphor bronze, a large improvement in the slidability of the two members is achieved.

It should be noted that when the rotary side is constituted by the sliding member having a sliding surface made of phosphor bronze, a position in which the sliding surface made of phosphor bronze contacts the sliding surface made of hard hydrogenated amorphous carbon varies during rotation, and therefore seizure is less likely to occur. When the rotary side is constituted by the sliding member having a sliding surface made of hydrogenated amorphous carbon, on the other hand, a part of the sliding surface made of hydrogenated amorphous carbon slides continuously against the entire sliding surface made of phosphor bronze, and therefore seizure may occur more easily than in the former case.

On the basis of the findings described above, in the piston pump 100, a sliding surface of the rotary side cylinder block 2 is preferably formed from phosphor bronze, and a sliding surface of the fixed side valve plate 6 is preferably formed from hydrogenated amorphous carbon doped with chrome. In the piston pump 100, a surface pressure between the respective sliding surfaces of the cylinder block 2 and the valve plate 6 is higher on the discharge port side than on the suction port side due to an effect of a discharge pressure, and therefore the cylinder block 2 rotates in a condition of slightly one-sided contact with the valve plate 6. Hence, by forming the sliding surface on the valve plate 6 side from hard hydrogenated amorphous carbon, not only the slidability between the cylinder block 2 and the valve plate 6 can be improved, but also wear between the two sliding surfaces can be suppressed. In terms of the seizure resistance, however, the sliding surface of the cylinder block 2 may be formed from hydrogenated amorphous carbon doped with chrome and the sliding surface of the valve plate 6 may be formed from phosphor bronze.

Further, as an example not covered by the claims, as shown in FIG. 2, likewise when the sliding surface of the rotary side or fixed side sliding member was formed from hydrogenated amorphous carbon (a-C:H) not doped with a metal, seizure did not occur between the hydrogenated amorphous carbon (a-C:H) and the phosphor bronze.

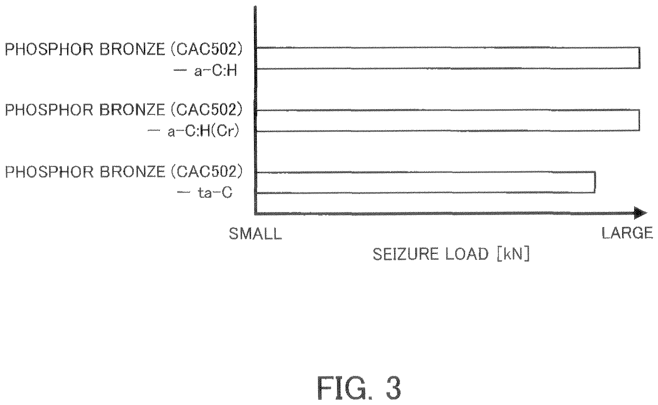

Hence, in the piston pump 100, the sliding surface of one of the cylinder block 2 and the valve plate 6 may be formed from hydrogenated amorphous carbon not doped with a metal, and the sliding surface of the other may be formed from phosphor bronze. It should be noted that tetrahedral amorphous carbon (ta-C) not containing hydrogen, an example not falling under the claims too, may be used instead of the hydrogenated amorphous carbon (a-C:H). As shown in FIG. 3, when the sliding surface of one of the cylinder block 2 and the valve plate 6 is formed from tetrahedral amorphous carbon (ta-C) and the sliding surface of the other is formed from phosphor bronze, a substantially identical seizure reduction effect to that of a combination of hydrogenated amorphous carbon doped with chrome (a-C:H(Cr)) and phosphor bronze or the like is obtained.

With the piston pump 100 according to the embodiment described above, following effects can be obtained.

In the piston pump 100, the sliding surface of the cylinder block 2 is formed from phosphor bronze (CAC502) while the sliding surface of the valve plate 6 is formed from hydrogenated amorphous carbon doped with chrome (a-C:H(Cr)), and therefore the slidability between the cylinder block 2 and the valve plate 6 can be improved. Further, even when the cylinder block 2 slides against the valve plate 6 in a condition of one-sided contact, wear on the respective sliding surfaces of the cylinder block 2 and the valve plate 6 can be suppressed. Furthermore, phosphor bronze is a copper alloy not containing lead, and therefore no adverse effects occur on humans, the environment, and so on.

The sliding surface of the cylinder block 2 is formed from phosphor bronze (a copper alloy), which is softer than a metal such as a steel material, and therefore, when minute foreign matter becomes caught between the sliding surfaces of the valve plate 6 and the cylinder block 2, the minute foreign matter bites into the phosphor bronze sliding surface of the cylinder block 2 so as to become buried therein. Hence, the hydrogenated amorphous carbon film on the valve plate 6 is unlikely to be damaged by the minute foreign matter, and as a result, peeling of the hydrogenated amorphous carbon film on the valve plate 6 is suppressed.

An embodiment of the present invention was described above, but the above embodiment merely illustrates a part of examples of applications of the present invention,

In sliding members that slide against each other such as the cylinder block 2 and the valve plate 6, combinations such as those shown on Table 1, for example, may be used as combinations of the copper alloy and the amorphous carbon forming the respective sliding surfaces of the sliding members.

**[Table 1]**

| | Copper Alloy | | | | |
|---|---|---|---|---|---|
| | Phosphor Bronze (CAC502) | Alloy Containing Bi | S Material | High Strength Brass (CAC303) | Corson Alloy |
| | P :0.05 -0.2% | Bi:2-14% | P:0.01 -0.2% | Zn:22 -28% | Sn:0.1-0.3% |
| | | Sn:8-12% | | | Ni:1.5-3% |
| | Sn:9-12% | Cu:remainder | Sn:8-12(% | Fe:2-4% | Si:0.4-0.8% |
| | Cu:remainder | | Fe:1-2% | Al:3-5% | Cr:0.5-1.5% |
| | | | S:0.4-3% | Mn:2.5-5% | Cu:remainder |
| | | | Cu:remainder | | |
| | | | | Cu:remainder | |
| a-C:H(Cr) | ○ | ○ | ○ | ○ | ○ |
| a-C:H | ○ | - | - | - | - |
| ta-C | ○ | - | - | - | - |

As shown on Table 1, when the sliding surface of one sliding member is formed from hydrogenated amorphous carbon doped with a metal such as chrome (a-C:H(Cr)), the sliding surface of the other sliding member is formed from a copper alloy such as phosphor bronze (CAC502), a copper alloy containing bismuth (Bi), an S material, high strength brass (CAC303), or a Corson copper alloy. These copper alloys are lead-free alloys not containing lead. Further, a copper alloy is an alloy having copper (Cu) as a main component.

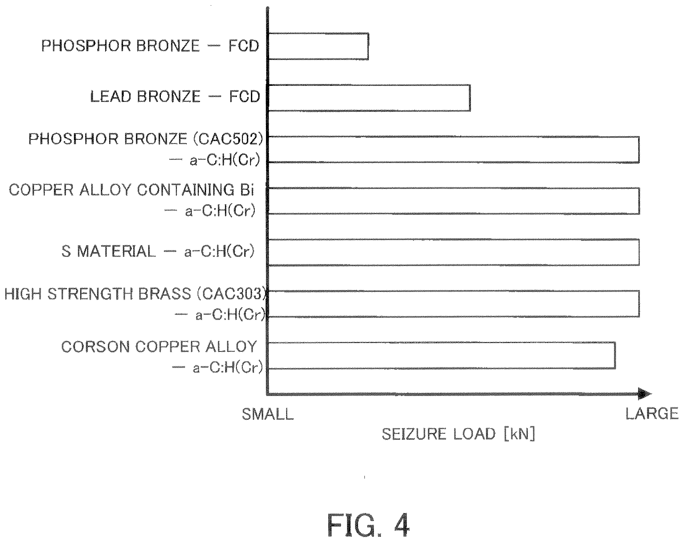

As shown in FIG. 4, by forming the sliding surface of one sliding member from hydrogenated amorphous carbon doped with chrome (a-C:H(Cr)) and forming the sliding surface of the other sliding member from any of phosphor bronze, a copper alloy containing bismuth, an S material, high strength brass, and a Corson copper alloy, a reduction in seizure between the two sliding members can be obtained in comparison with a conventional combination of a cast iron material (FCD) and phosphor bronze or lead bronze. Moreover, peeling of the hydrogenated amorphous carbon film of the sliding member when minute foreign matter becomes caught can be suppressed likewise when a copper alloy containing bismuth, an S material, high strength brass, or a Corson copper alloy is used.

When the sliding surface of one sliding member is formed from hydrogenated amorphous carbon (a-C:H) not doped with a metal or tetrahedral amorphous carbon (ta-C) not containing hydrogen, the sliding surface of the other sliding member is formed from phosphor bronze (CAC502). The seizure reduction effect obtained in this case is as shown in FIG. 3.

Furthermore, the sliding surface of one sliding member may be formed from an aluminum alloy, which is a comparatively soft material similarly to a copper alloy, instead of a copper alloy. Combinations such as those shown on Table 2, for example, may be used as combinations of the aluminum alloy and the amorphous carbon forming the respective sliding surfaces of the sliding members that slide against each other.

**Table 2**

| | Alminum Alloy | | | | |
|---|---|---|---|---|---|
| | Die Cast Alminum (ADC12) | Cast Alminum (AC4C) | Cast Alminum (NH42) | Wrought Alminum (A5052) | Wrought Alminum (A6061) |
| | Cu:1.5-3.5% | Si:6.5-7.5% | Cu:2.5-4% | Mg:2.2-2.8% | Si:0.4-0.8% |
| | | | Si:14-16% | | |
| | Si:9.6-12% | Mg:0.25-0.4% | Mg:0.7-0.9% | Cr:0.15-0.35% | Cu:0.15-0.4% |
| | Fe:0.6-1% | Al:remaind-er | Fe:0.2-0.4% | Al:remaind-er | Mg:0.8-1.2% |
| | Al:remaind-er | | Al:remaind-er | | Cr:0.04-0.35% |
| | | | | | Al:remaind-er |
| a-C:H(Cr) | ○ | ○ | ○ | ○ | ○ |
| a-C:H | - | - | - | - | - |
| t a-C | - | - | - | - | - |

When the sliding surface of one sliding member is formed from hydrogenated amorphous carbon (a-C:H(Cr)) doped with a metal such as chrome, the sliding surface of the other sliding member is formed from an aluminum alloy such as die cast aluminum (ADC12), cast aluminum (AC4C or NH42), or wrought aluminum (A5052 or A6061). These aluminum alloys are lead-free alloys not containing lead. Further, an aluminum alloy is an alloy having aluminum (Al) as a main component.

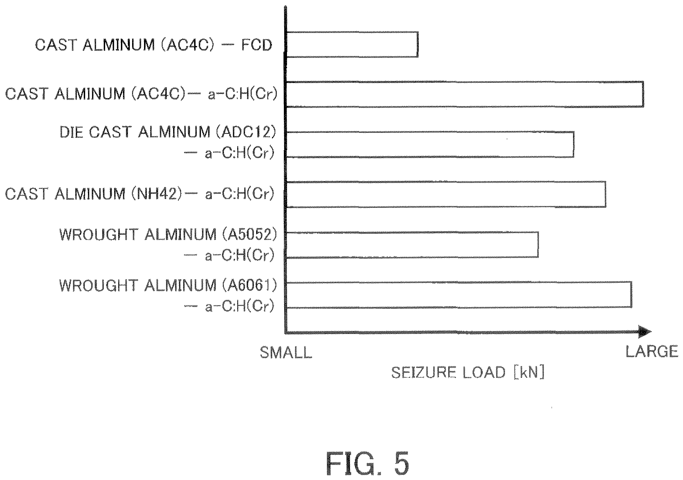

As shown in FIG. 5, by forming the sliding surface of one sliding member from hydrogenated amorphous carbon doped with chrome (a-C:H(Cr)) and forming the sliding surface of the other sliding member from any of die cast aluminum, cast aluminum, and wrought aluminum, a reduction in seizure between the two sliding members can be obtained in comparison with conventional combinations of a cast iron material (FCD) and cast aluminum (AC4C) or a cast iron material and lead bronze (see FIG. 4). Moreover, peeling of the hydrogenated amorphous carbon film of the sliding member when minute foreign matter becomes caught can be suppressed likewise when die cast aluminum, cast aluminum, or wrought aluminum is used.

The present application claims priority based on Japanese Patent Application No. 2012-81088, filed with the Japan Patent Office on March 30, 2012.

## Claims

1. Sliding members (2, 6) that slide against each other, wherein a sliding portion of one sliding member (2, 6) is formed from hydrogenated amorphous carbon doped with chrome, and
a sliding portion of another sliding member (2, 6) is formed from a copper alloy or an aluminum alloy.

2. A piston pump/motor (100), wherein one of the sliding members as defined in Claim 1 is used as a valve plate (6) fixed within a case, and the other sliding member is used as a cylinder block (2) disposed in the case so as to slide against the valve plate (6).

3. The piston pump/motor (100) as defined in Claim 2, wherein a sliding portion of the valve plate (6) is formed from hydrogenated amorphous carbon doped with chrome, and a sliding portion of the cylinder block (2) is formed from a copper alloy or an aluminum alloy.

4. The piston pump/motor (100) as defined in Claim 2 or 3, wherein the copper alloy and the aluminum alloy are lead-free alloys not containing lead.

## Patentansprüche

1. Gleitelemente (2, 6), die gegeneinander gleiten, wobei ein Gleitabschnitt einer der Gleitelemente (2, 6) von hydrierten amorphen Kohlenstoff dotiert mit Chrom geformt ist, und ein Gleitabschnitt eines anderen Gleitelements (2, 6) aus einer Kupferlegierung oder einer Aluminiumlegierung geformt ist.

2. Ein Kolbenpumpen/Motor (100), wobei eines der Gleitelemente, das in Anspruch 1 definiert ist, als eine Ventilplatte (6) verwendet wird, die innerhalb eines Gehäuses fixiert ist, und das andere Gleitelement als ein Zylinderblock (2) benutzt wird und so in dem Gehäuse vorgesehen ist, um gegen die Ventilplatte (6) zu gleiten.

3. Der Kolbenpumpen/Motor (100) wie in Anspruch 2 definiert, wobei ein Gleitabschnitt der Ventilplatte (6) von hydrierten amorphen Kohlenstoff dotiert mit Chrom geformt ist, und ein Gleitabschnitt des Zylinderblocks (2) aus einer Kupferlegierung oder einer Aluminiumlegierung geformt ist.

4. Der Kolbenpumpen/Motor (100) wie in den Ansprüchen 2 oder 3 definiert, wobei die Kupferlegierung und die Aluminiumlegierung bleifreie Legierungen sind, die Blei nicht enthalten.

## Revendications

1. Eléments coulissants (2, 6) qui coulissent les uns contre les autres,
dans lesquels
une partie coulissante d'un élément coulissant (2, 6) est formée de carbone amorphe hydrogéné dopé au chrome, et
une partie coulissante d'un autre élément coulissant (2, 6) est formée d'un alliage de cuivre ou d'un alliage d'aluminium.

2. Moteur de pompe à piston (100), dans lequel l'un des éléments coulissants selon la revendication 1 est utilisé comme plaque de soupape (6) fixée dans un boîtier, et l'autre élément coulissant est utilisé comme bloc-cylindres (2) disposé dans le boîtier de manière à coulisser contre la plaque de soupape (6).

3. Moteur de pompe à piston (100) selon la revendication 2,
dans lequel une partie coulissante de la plaque de soupape (6) est formée de carbone amorphe hydrogéné dopé au chrome, et une partie coulissante du bloc-cylindres (2) est formée d'un alliage de cuivre ou d'un alliage d'aluminium.

4. Moteur de pompe à piston (100) selon les revendications 2 ou 3, dans lequel l'alliage de cuivre et l'alliage d'aluminium sont des alliages sans plomb ne contenant pas de plomb.
